(19) Europäisches Patentamt
European Patent Office
Office européen des brevets

(11) EP 2 638 080 B1

(12) **EUROPEAN PATENT SPECIFICATION**

(45) Date of publication and mention of the grant of the patent:
**07.01.2015 Bulletin 2015/02**

(21) Application number: **11781521.7**

(22) Date of filing: **08.11.2011**

(51) Int Cl.:
***C08F 10/06*** (2006.01) ***C08F 2/00*** (2006.01)
***C08F 4/646*** (2006.01)

(86) International application number:
**PCT/EP2011/069614**

(87) International publication number:
**WO 2012/062735 (18.05.2012 Gazette 2012/20)**

(54) **IMPROVED PROCESS FOR POLYMERISING PROPYLENE**

VERBESSERTES VERFAHREN ZUR POLYMERISIERUNG VON PROPYLEN

PROCÉDÉ PERFECTIONNÉ POUR LA POLYMÉRISATION DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2010 EP 10190992**

(43) Date of publication of application:
**18.09.2013 Bulletin 2013/38**

(73) Proprietor: **Borealis AG**
**1220 Vienna (AT)**

(72) Inventors:
- **PAAVILAINEN, Juha**
**FI-00510 Helsinki (FI)**
- **LESKINEN, Pauli**
**FI-00700 Helsinki (FI)**
- **HAKOLA, Sameli**
**FI-00500 Helsinki (FI)**
- **SANDHOLZER, Daniel**
**A-4020 Linz (AT)**
- **GREIN, Christelle**
**A-4020 Linz (AT)**

(74) Representative: **Lux, Berthold et al**
**Maiwald Patentanwalts GmbH**
**Elisenhof**
**Elisenstraße 3**
**80335 München (DE)**

(56) References cited:
**EP-A1- 1 935 938**
**EP-A1- 2 226 337**
**EP-A1- 2 275 485**
**WO-A1-2009/129873**
**WO-A1-2009/153213**
**WO-A2-2008/015113**
**WO-A2-2009/050045**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention is related to an improved process for polymerising propylene, said process showing improved operability and allows an easy and flexible method for controlling polymer properties.

Polypropylene has many characteristics which makes it useful for applications ranging from packaging to infrasture (e.g. pipe) or parts for automotive.

A well-known process for polymerising propylene is a process, which is based around a loop reactor and a gas phase reactor operating in cascade with highly specialised catalyst. In addition to these two basic reactors, such polymerisation reaction systems can include further reactors, such as pre- and/or postreactors, like reactors for prepolymerising the catalyst with propylene and/or other alpha-olefin(s) and/or ethylene. It is further possible to preactivate and activate the catalyst before (pre)polymerisation. During such a catalyst preactivation step the catalyst can also be modified by using special vinyl compounds.

Postreactors include reactors used for modifying and improving the properties of the polymer product. Typical examples are additional gas phase reactors.

All reactors of such a reactor system are preferably arranged in series.

With these reactor systems propylene homopolymers and random copolymers as well as heterophasic copolymers can be produced.

One of these well-known processes is the Borstar®PP process, which is for example described in EP 0 887 379; EP 0 887 380; EP 0 887 381; EP 0 991 719, EP 1 028 984, EP 1 598 377; etc.

The polypropylene processes are conventionally performed in presence of a high yield catalyst system comprising a catalyst component, the s.c. procatalyst, a cocatalyst component and a compound acting as external donor. The catalyst component is typically a Ziegler-Natta type catalyst containing as essential components magnesium, titanium and halogen.

It is a known fact that normally the catalyst loses activity as it proceeds from one reactor to the other. This becomes more of an issue when productivity in the gas phase reactor(s) is the limiting factor.

External donors are used to control the isotacticity of the produced polymer. These external donors have also a huge impact on the catalyst activity as the catalyst activity goes down with increasing amounts of external donor.

Thus the activity of the catalyst is one key-parameter of these processes.

Furthermore, if polypropylenes having a high MFR are desired, it is important to use a catalyst with a high hydrogen response during polymerisation to produce such polymers in order to keep the necessary amount of hydrogen to adjust the molecular weight as low as possible.

Even more important is therefore the right balance between high activity, efficient process control and robustness of the process as such.

Several tools are available to control the process in terms of (i) increased catalyst activity, (ii) drive of product properties and (iii) improvement of robustness. Many active manipulation tools like temperature variation in the loop and/or gas phase reactor(s), pressure or gas ratio changes are linked with product properties and need to be adjusted during the production, thus are not relevant as process tuners as such.

It was therefore an object of the present invention to improve the operability and control of the polypropylene production process by tools which are not or only marginally linked to product properties but have a major influence on the process or its stability.

The present invention resides in the finding that by splitting the external donor feed between prepolymerisation and slurry phase polymerisation leads to an increase in productivity in the subsequent gas phase reactor(s) and/or to an increase of the hydrogen response in the slurry phase polymerisation, whereby end properties, like xylene cold solubles, of the produced polymer can be controlled easier.

The present invention therefore provides a process for producing polypropylene, which process comprises the steps of (a) prepolymerisation, (b) slurry phase polymerisation (c) gas phase polymerisation and optionally (d) one or two further gas phase polymerisation(s), whereby the process is performed in the presence of a catalyst system comprising

(x) a Ziegler-Natta procatalyst and
(y) an organometallic cocatalyst and
(z) an external donor represented by formula (I) and/or (II)

$$Si(OCH_2CH_3)_3(NR^1R^2) \text{ (I) or } R^3nR^4mSi(OR^5)z \qquad \text{(II)}$$

wherein $R^1$ and $R^2$ can be the same or different and represent a hydrocarbon group having 1 to 12 carbon atoms and $R^3$ and $R^4$ can be the same or different and represent a hydrocarbon group having 1 to 12 carbon atoms, $R^5$ is methyl or ethyl, z is 2 or 3, preferably 2, m is 0 or 1, n is 0 or 1, with the proviso that n + m +z = 4,

the external donor being added in an amount of 3 to 30 wt%, based on the total amount of external donor added, to the prepolymerisation step and in an amount of 70 to 97 wt%, based on the total amount of external donor added, to the slurry polymerisation step.

The invention covers both, the production of homopolymers of propylene and of copolymers, preferably random copolymers, of propylene with one or more alpha-olefins including ethylene.

The invention covers also the production of heterophasic propylene polymers (also called block copolymers), comprising a polypropylene homo- or copolymer matrix component, wherein an elastomeric propylene copolymer component, so called rubber component, is dispersed.

The term "copolymer" as used herein is intended to encompass polymers comprising repeat units deriving from one monomer and at least one other monomer. In typical copolymers at least 0.25 mol%, preferably at least 0.5 mol%, e.g. at least 1 mol%, such as up to 10 mol% of repeat units derive from the comonomer.

Comonomers are preferably selected from ethylene and/or one other $C_4$ to $C_{10}$ alpha-olefin like 1-butene, 1-pentene, 1-hexene, 1-heptene and 1-octene. Preferably the comonomer is ethylene.

In contrast the term "homopolymer" as used herein is intended to encompass polymers which consist essentially of repeat units deriving from one monomer. Homopolymers may, for example, comprise at least 99.8 %, preferably at least 99.9 %, by weight of repeat units deriving from the monomer.

The elastomeric copolymer must comprise propylene and at least ethylene and/or one other $C_4$ to $C_{10}$ alpha-olefin. Preferably the elastomeric copolymer comprises, preferably consists of, propylene and at least one alpha-olefin comonomer selected from the group consisting of ethylene, 1-butene, 1-pentene, 1-hexene, 1-heptene and 1-octene. Preferably the elastomeric copolymer comprises at least propylene and ethylene and may comprise a further alpha-olefin as defined in this paragraph. However it is in particular preferred that the elastomeric copolymer comprises, more preferably consists of, propylene and ethylene as the only polymerisable units. Thus an ethylene-propylene rubber (EPR) as elastomeric copolymer is most preferred.

According to the invention the polypropylenes are obtained by a polymerisation process in the presence of a catalyst system comprising as component (x) a Ziegler-Natta procatalyst (y) an organometallic cocatalyst and (z) an external donor represented by formula (I) or (II)

$$Si(OCH_2CH_3)_3(NR^1R^2) \text{ (I) or } R^3nR^4mSi(OR^5)z \qquad \text{(II)}$$

wherein $R^1$ and $R^2$ can be the same or different and represent a hydrocarbon group having 1 to 12 carbon atoms and $R^3$ and $R^4$ can be the same or different and represent a hydrocarbon group having 1 to 12 carbon atoms, $R^5$ is methyl or ethyl, z is 2 or 3, preferably 2, m is 0 or 1, n is 0 or 1, with the proviso that n + m +z = 4.

The Ziegler-Natta procatalyst (x) used according to the present invention is typically a stereospecific, high yield Ziegler-Natta procatalyst comprising as essential component a solid transition metal component. This type of procatalysts comprise, as described in detail below, in addition to the solid transition metal (like Ti) component a cocatalyst(s) (y) as well external donor(s) (z) as stereoregulating agent.

The solid transition metal component preferably comprises a magnesium halide and a transition metal compound. These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754 and WO 2004/029112.

It is also possible that solid catalysts are self supported, i.e. the catalysts are not supported on an external support, but are prepared via emulsion-solidification technology, as described for example in WO 03/000757, WO 03/000754 and WO 2004/029112.

In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4347160, US 4382019, US 4435550, US 4465782, US 4473660, US 4530912 and US 4560671.

Preferably the Ziegler-Natta procatalyst (x) used for the present invention is a Ziegler-Natta procatalyst, which contains a trans-esterification product of a $C_1$-$C_4$-alcohol and a phthalic ester as internal donor and which is optionally modified with a vinyl compound of formula (III) $CH_2$=CH-CHR$^6$R$^7$, wherein $R^6$ and $R^7$ together form a 5- or 6-membered saturated, unsaturated or aromatic ring or independently represent an alkyl group comprising 1 to 4 carbon atoms.

Such preferred procatalyst (x) used according to the invention is prepared by

a) reacting a spray crystallized or emulsion solidified adduct of $MgCl_2$ and a $C_1$-$C_4$-alcohol with $TiCl_4$
b) reacting the product of stage a) with a dialkylphthalate of formula (IV)

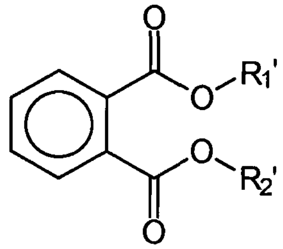

(IV)

wherein $R_1$' and $R_2$' are independently at least a $C_5$-alkyl,
under conditions where a transesterification between said $C_1$-$C_4$-alcohol and said dialkylphthalate of formula (IV) takes place to form the internal donor,
c) washing the product of stage b) and
d) optionally reacting the product of step c) with additional $TiCl_4$.

The procatalyst is produced as defined for example in the patent applications WO 87/07620, WO 92/19653, WO 92/19658 and EP 0 491 566.

First an adduct of $MgCl_2$ and a $C_1$-$C_4$-alcohol of the formula $MgCl_2$*nROH, wherein R is $C_1$-$C_4$-alkyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is $C_1$-$C_4$-alkyl, preferably ethyl and n is 1 to 6, is contacted with $TiCl_4$ to form a titanised carrier, followed by the steps of

- adding to said titanised carrier

    (i) a dialkylphthalate of formula (IV) with $R_1$' and $R_2$' being independently at least a $C_5$-alkyl, like at least a $C_8$-alkyl, or preferably
    (ii) a dialkylphthalate of formula (IV) with $R_1$' and $R_2$' being the same and being at least a $C_5$-alkyl, like at least a $C_8$-alkyl
    or more preferably
    (iii) a dialkylphthalate of formula (IV) selected from the group consisting of propylhexylphthalate (PrHP), di(ethylhexyl)phthalate, di-iso-decylphthalate (DIDP), and ditridecylphthalate (DTDP), yet more preferably the dialkylphthalate of formula (IV) is di(ethylhexyl)phthalate (DOP) or di-isooctylphthalate, in particular di(ethylhexyl)phthalate,
    to form a first product,

- subjecting said first product to suitable transesterification conditions, i.e. to a temperature between 100 to 150 °C, such that said $C_1$-$C_4$-alkohol is transesterified with said ester groups of said dialkylphthalate of formula (IV) to form preferably at least 80 mol-%, more preferably at least 90 mol-%, most preferably at least 95 mol-%, of a dialkylphthalate of formula (V)

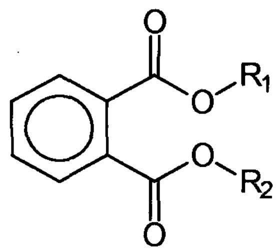

(V)

with $R^1$ and $R^2$ being $C_1$-$C_4$-alkyl, preferably ethyl,
the dialkylphthalate of formula (V) being the internal donor and
- recovering said transesterification product as the procatalyst composition.

The adduct of the formula $MgCl_2$*nROH, wherein R is $C_1$-$C_4$-alkyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the

present invention as described in WO 92/19658 and WO 92/19653.

The transesterification is performed at a temperature above 100°C, advantageously between 130 to 150 °C.

As the catalyst residue is removed by extracting, an adduct of the titanised carrier and the internal donor is obtained, in which the group deriving from the ester alcohol has changed.

In case a sufficient amount of titanium remains on the carrier, it will act as an active element of the procatalyst.

Otherwise the titanisation is repeated after the above treatment in order to ensure a sufficient titanium concentration and thus activity.

Preferably the procatalyst used according to the invention contains 2.5% by weight of titanium at the most, preferably 2.2% by weight at the most and more preferably 2.0 % by weight at the most. Its donor content is preferably between 4 to 12% by weight and more preferably between 6 and 10 % by weight.

More preferably the procatalyst used according to the invention has been produced by using ethanol as the alcohol and di(ethylhexyl)phthalate (DOP) as dialkylphthalate of formula (IV), yielding diethylphthalate (DEP) as the internal donor compound.

Still more preferably the procatalyst used according to the invention is a catalyst prepared according to WO92/19653; especially with the use of di(ethylhexyl)phthalate as dialkylphthalate of formula (IV) or alternatively a polypropylene catalyst in the series of Polytrack, commercially available from Grace.

The procatalyst may optionally be modified by a vinyl compound of formula (III) $CH_2=CH-CHR^6R^7$ wherein $R^6$ and $R^7$ together form a 5- or 6-membered saturated, unsaturated or aromatic ring or independently represent an alkyl group comprising 1 to 4 carbon atoms.

Examples for suitable vinyl compounds are vinyl cycloalkanes, like vinyl cyclohexene (VCH), vinyl cyclopentane, vinyl-2-methyl cyclohexene and vinyl norbornane, 3-methyl-1-butene, styrene, p-methyl-styrene, 3-ethyl-1-hexene or mixtures thereof. VHC is preferably used for procatalyst modification.

In such a catalyst modification step the procatalyst is modified by using the vinyl compound of formula (III) in a medium, which is a liquid or a highly viscous hydrocarbon medium and which does not dissolve the polymerised polymer. Furthermore, the modification is preferably accomplished in such a way that all or practically all vinyl compound used for modification is consumed during polymerisation of the vinyl compounds. To reach that preferred aim, polymerisation is continued at elevated temperature until the concentration of the unreacted vinyl compounds in the catalyst composition after polymerisation is about 0.5 wt% or less. The modification is carried out before any conventional, usually continuous, prepolymerisation with an olefinic monomer, to ensure that the polymerisation of the vinyl compound is complete.

The polymerised vinyl compound can act as a nucleating agent.

Concerning the modification of catalyst reference is made to the international applications WO 99/24478, WO 99/24479 and particularly WO 00/68315, with respect to the reaction conditions concerning the modification of the catalyst as well as with respect to the polymerisation reaction.

Furthermore this method is also known as Borealis Nucleation Technology (BNT)

As cocatalyst (y) an organometallic compound is used.

The organometallic compound is preferably an organoaluminium compound selected from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

Component (z) of the catalysts system used is in one embodiment an external donor represented by formula (I)

$$Si(OCH_2CH_3)_3(NR^1R^2)$$

wherein $R^1$ and $R^2$ can be the same or different a represent a hydrocarbon group having 1 to 12 carbon atoms.

$R^1$ and $R^2$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^1$ and $R^2$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both $R^1$ and $R^2$ are the same, yet more preferably both $R^1$ and $R^2$ are an ethyl group.

Most preferably diethylaminotriethoxysilane is used as external donor of formula (I).

In a second embodiment component (z) of the catalyst system used is an external donor represented by formula (II) $R^3nR^4mSi(OR^5)z$,

wherein $R^3$ and $R^4$ can be the same or different and represent a hydrocarbon group having 1 to 12 carbon atoms, $R^5$ is methyl or ethyl, z is 2 or 3, preferably 2, m is 0 or 1, n is 0 or 1, with the proviso that n + m +z = 4

Preferably $R^3$ and $R^4$ are independently selected from the group consisting of linear aliphatic hydrocarbon group, branched aliphatic hydrocarbon group, cyclic aliphatic hydrocarbon group and aromatic group. It is in particular

preferred that $R^3$ and $R^4$ are independently selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

Preferred examples are diisopropyldiethoxysilane (DIPDES), cyclohexylmethyldiethoxysilane (CHMDES), dicyclopentyldimethoxysilane (DCPDMS), cyclohexylmethyl-dimethoxysilane (CHMDMS) and dicyclopentadienyldiethoxysilane (DCPDES). More preferably an external donor of formula (II) selected from cyclohexylmethyl-dimethoxysilane, dicyclopentyldimethoxysilane and di-iso-propyldiethoxysilane (DIPDES) is used and most preferably the dicyclopentyldimethoxysilane is used as external donor of formula (II).

According to the invention the polypropylenes are produced with a multi-stage process.

The first step is the prepolymerisation step (a).

The prepolymerisation may be carried out in any type of continuously operating polymerisation reactor. Suitable reactors are continuous stirred tank reactors (CSTR), a loop reactor or a comparted reactor such as disclosed in WO 97/33920 or WO 00/21656 or a cascade of two or more reactors may be used.

Although the prepolymerisation may be carried out in a slurry polymerisation or a gas phase polymerisation, it is preferred to carry out the prepolymerisation as a slurry polymerisation, more preferably in a loop prepolymerisation reactor.

In a preferred embodiment, the prepolymerisation is conducted as bulk slurry polymerisation in liquid propylene, i.e. the liquid phase mainly comprises propylene, with minor amount of other reactants and optionally inert components dissolved therein.

The prepolymerisation is carried out in a continuously operating reactor at an average residence time of 5 minutes up to 90 min. Preferably the average residence time is within the range of 10 to 60 minutes and more preferably within the range of 15 to 45 minutes.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase and is generally selected such that the pressure is higher than or equal to the pressure in the subsequent polymerisation. Thus, the pressure may be from 20 to 100 bar, for example 30 to 70 bar.

The procatalyst and the cocatalyst are preferably all introduced to the prepolymerisation step. However, where the solid procatalyst and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

According to the invention the external donor is added in an amount of 3 to 30 wt%, based on the total amount of external donor added, to the prepolymerisation step.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

A small amount of comonomer (ethylene and/or a $C_4$-$C_{10}$ alpha-olefin) may be introduced. The amount of comonomer is less than 5 weight % in order to avoid the occurrence of sticky particles which are caused by the reduced crystallinity of the prepolymer in the prepolymerised catalyst particles.

The reactants, procatalyst, cocatalyst, external donor, alpha-olefin monomer, comonomer, additives and the like, may be introduced in the prepolymerisation reaction or reactor continuously or intermittently. Continuous addition is preferred to improve process stability. The prepolymerised catalyst may be withdrawn from the prepolymerisation reaction or reactor either continuously or intermittently. Again a continuous withdrawal is preferred.

The precise control of the prepolymerisation conditions and reaction parameters is within the skill of the art.

The next step of the process according to the invention is a slurry phase polymerisation step (b).

A slurry reactor designates any reactor, such as a continuous or simple batch stirred tank reactor or loop reactor, operating in bulk or slurry and in which the polymer forms in particulate form. "Bulk" means a polymerisation in reaction medium that comprises at least 60wt% monomer. According to a preferred embodiment the slurry reactor comprises a bulk loop reactor.

Slurry phase polymerisation is carried out at temperatures of from 40°C to 110°C, preferably between 50°C and 100°C, in particular between 60°C and 90°C, with a pressure in the range of from 20 to 80 bar, preferably 30 to 60 bar, with the option of adding hydrogen in order to control the molecular weight in a manner known per se.

The reaction product of the slurry phase polymerisation, which preferably is carried out in a loop reactor, is then transferred to the subsequent gas phase reactor.

Thus the third step of the process according to the invention is a gas phase polymerisation step (c).

"Gas phase reactor" means any mechanically mixed or fluid bed reactor. Preferably the gas phase reactor comprises a mechanically agitated fluid bed reactor with gas velocities of at least 0.2 m/sec.

Gas phase polymerisation is carried out at a temperature within the range of from 50°C to 130°C, more preferably 60°C to 100°C, and at a pressure in the range of from 5 to 50 bar, preferably 8 to 40 bar, again with the option of adding hydrogen in order to control the molecular weight in a manner known per se.

The residence time can vary in the reactor zones identified above. In one embodiment, the residence time in the slurry reactor, for example a loop reactor, is in the range of from 0.1 to 5 hours, for example 0.2 to 2 hours, while the residence time in the gas phase reactor generally will be from 1 to 8 hours.

If desired, the polymerisation may be effected in a known manner under supercritical conditions in the slurry, preferably loop reactor, and/or as a condensed mode in the gas phase reactor.

The polypropylenes produced in such a process, comprising steps (a), (b) and (c) are homopolymers or random copolymers which can be unimodal or multimodal, like bimodal.

The expressions "multimodal" or "bimodal" or "unimodal" used herein refers to the modality of the polymer, i.e. the form of its molecular weight distribution curve, which is the graph of the molecular weight fraction as a function of its molecular weight. As is explained above, the polypropylenes are produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution of the final polymer, that curve may show two or more maxima or at least be distinctly broadened when compared with curves for the individual fractions. Alternatively, a unimodal polymer may be produced in a multistage process using at each stage process conditions which result in similar polymer properties.

The process according to the invention can further comprise one or two further gas phase polymerisation step(s).

This is especially the case if heterophasic copolymers are the desired products.

In the additional gas phase reactor(s) the elastomeric propylene copolymer component, so called rubber component, as described above, is produced.

Preferred multistage processes are slurry-gas phase process, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315.

An essential feature of the process according to the present invention is the split of the external donor feed between prepolymerisation and slurry phase polymerisation.

The classical and traditional way to introduce the external donor to the polypropylene polymerisation process is to first contact the whole amount of the external donor with the cocatalyst, e.g. with triethylaluminium, and secondly to contact the first contact product of external donor and cocatalyst with the Ziegler-Natta procatalyst to yield a second contact product, which is then fed to the prepolymerisation step.

According to the present invention only a minor amount of the external donor is fed to the prepolymerisation step (allowing contacting it with cocatalyst and procatalyst) and the main part of the external donor is fed to the slurry phase polymerisation step.

Thus, according to the invention, only 3 to 30 wt%, preferably 5 to 25 wt% and more preferably 8 to 22 wt%, of the total amount of the external donor is fed to the prepolymerisation step and 70 to 97 wt%, preferably 75 to 95 wt% and more preferably 78 to 92 wt%, of the total amount of the external donor is fed to the slurry phase polymerisation step.

With this procedure it was unexpectedly achieved that the productivity in the first and subsequent gas phase reactor(s) and/or the hydrogen response in the loop reactor of the slurry phase polymerisation step can be increased, whereby the end properties of the produced polymers are not effected.

Thus the process shows an improved operability.

In a preferred embodiment the process is a process for producing propylene homopolymers or propylene random copolymers, said process comprises the steps of (a) prepolymerisation,

(b) slurry phase polymerisation and (c) gas phase polymerisation, whereby the process is performed in the presence of a catalyst system comprising

(x) a Ziegler-Natta procatalyst,

(y) an organometallic cocatalyst and

(z) an external donor represented by formula (II)

$$R^3nR^4mSi(OR^5)z \qquad (II)$$

wherein $R^3$ and $R^4$ can be the same or different and represent a hydrocarbon group having 1 to 12 carbon atoms, $R^5$ is methyl or ethyl, z is 2 or 3, preferably 2, m is 0 or 1, n is 0 or 1, with the proviso that n + m +z = 4,
the external donor being added in an amount of 5 to 25 wt%, preferably 8 to 18 wt%, based on the total amount of external donor added, to the prepolymerisation step and in an amount of 75 to 95 wt%, preferably 82 to 92 wt%, based on the total amount of external donor added, to the slurry polymerisation step.

In this case, the Ziegler-Natta procatalyst (x) used, is preferably a Ziegler-Natta procatalyst, which contains a trans-esterification product of a $C_1$-$C_4$-alcohol and a phthalic ester of formula (IV) as internal donor, as described above.

With this preferred embodiment it is possible to produce propylene homopolymers or propylene random copolymers, whereby the catalyst productivity in the gas phase reactor is over 10% higher than with a conventional method where the whole amount of external donor or a larger percentage in the range of 35 to 50 wt% of the total amount of external donor is added to the prepolymerisation step.

In a further preferred embodiment the process is a process for producing heterophasic propylene polymers, said process comprises the steps of (a) prepolymerisation, (b) slurry phase polymerisation (c) gas phase polymerisation and (d) one or two further gas phase polymerisation(s), whereby the process is performed in the presence of a catalyst system comprising

(x) a Ziegler-Natta procatalyst
(y) an organometallic cocatalyst and
(z) an external donor represented by formula (I)

$$Si(OCH_2CH_3)_3(NR^1R^2) \qquad (I)$$

wherein $R^1$ and $R^2$ can be the same or different and represent a hydrocarbon group having 1 to 12 carbon atoms, the external donor being added in an amount of 5 to 30 wt%, preferably 8 to 25 wt%, based on the total amount of external donor added, to the prepolymerisation step and in an amount of 70 to 95 wt%, preferably 75 to 92 wt%, based on the total amount of external donor added, to the slurry polymerisation step.

In this case, the Ziegler-Natta procatalyst (x) used, is preferably a Ziegler-Natta procatalyst, which contains a trans-esterification product of a $C_1$-$C_4$-alcohol and a phthalic ester of formula (IV) as internal donor and is modified with a vinyl compound of formula (III) $CH_2$=CH-$CHR^6R^7$, wherein $R^6$ and $R^7$ together form a 5- or 6-membered saturated, unsaturated or aromatic ring or independently represent an alkyl group comprising 1 to 4 carbon atoms.

With this preferred embodiment it is possible to produce heterophasic propylene polymers whereby the catalyst productivity in the gas phase reactors is also increased to some extent and in addition the hydrogen response in the slurry phase polymerisation step has been remarkably improved.

## METHODS

### Melt Flow Rate ($MFR_2$)

The melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.

### Comonomer content

The comonomer contents of the copolymer was determined by quantitative Fourier transform infrared spectroscopy (FTIR) calibrated to results obtained from quantitative $^{13}C$ NMR spectroscopy.

When measuring the ethylene content in polypropylene, a thin film of the sample (thickness about 250 mm) was prepared by hot-pressing. The area of -$CH_2$- absorption peak (800-650 $cm^{-1}$) was measured with Perkin Elmer FTIR 1600 spectrometer. The method was calibrated by ethylene content data measured by $^{13}C$-NMR.

The comonomer content C was determined using a film thickness method using the intensity of the quantitative band I(q) and the thickness of the pressed film T using the following relationship: $[I(q) / T]m + c = C$ where m and c are the coefficients determined from the calibration curve constructed using the comonomer contents obtained from $^{13}C$ NMR spectroscopy.

### Xylene cold soluble fraction (XCS wt-%)

The xylene cold soluble fraction (XCS) is determined at 23 °C according to ISO 6427.

**The amorphous content (AM)** is measured by separating the above xylene cold soluble fraction (XCS) and precipitating the amorphous part with acetone. The precipitate was filtered and dried in a vacuum oven at 90 °C.

$$AM\% = \frac{100 \, x \, m1 \, x \, v0}{m0 \, x \, v1}$$

wherein

"AM%" is the amorphous fraction,
"m0" is initial polymer amount (g)
"m1" is weight of precipitate (g)
"v0" is initial volume (ml)
"v1" is volume of analyzed sample (ml)

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms (second heat) and exotherms (first heat).

**Intrinsic viscosity (IV)**

The intrinsic viscosity (IV) value increases with the molecular weight of a polymer. The IV values e.g. of the amorphous phase were measured according to ISO 1628/1 (October 1999) in tetraline at 135°C.
The **catalyst productivity** is defined as the amount of polymer in kilograms obtained per gram solid catalytic component used (e.g. kg PP/ g catalyst).

**Randomness**

In the FTIR measurements, films of 250 microns thickness were compression moulded at 225°C and investigated on a Perkin-Elmer System 2000 FTIR instrument. The ethylene peak area (760-700 $cm^{-1}$) was used as a measure of total ethylene content. The absorption band for the structure -P-E-P- (one ethylene unit between propylene units), occurs at 733 $cm^{-1}$. This band characterizes the random ethylene content. For longer ethylene sequences (more than two units), an absorption band occurs at 720 $cm^{-1}$. Generally, a shoulder corresponding to longer ethylene runs is observed for the random copolymers. The calibration for total ethylene content based on the area and random ethylene (PEP) content based on peak height at 733 $cm^{-1}$ was made by $^{13}C$-NMR. (Thermochimica Acta, 66 (1990) 53-68).

Randomness = random ethylene (-P-E-P-) content / the total ethylene content x 100%.

**EXAMPLE 1:**

The polymerisations were conducted in a Borstar pilot plant polymerisation process starting in a prepolymerisation reactor, followed by polymerisation in a bulk-phase loop reactor, again followed by polymerisation in a gas phase reactor, varying the molecular weight and ethylene content by appropriate hydrogen and comonomer feeds. The catalyst used in the polymerisation process was a 1.9 wt% Ti-Ziegler-Natta-catalyst prepared according to WO 92/19653 with DOP as dialkylphthalat of the formula (IV) and ethanol as alcohol, with triethyl-aluminium (TEA) as co-catalyst and dicyclopentyldimethoxysilane (donor) as donor in the ratios indicated in table 1.
First a reference example (REF1) with normal Donor feed was done and one lot was collected.
Next comparative examples with a donor split of 40:60 (meaning 40% of the Donor was fed via prepolymerisation and the rest directly into the loop reactor) were done. After process had stabilized two lots were collected with these settings (Comparative Example CE1 and CE2).
Then the donor split was changed to 10:90 and a final lot from stable process was collected (Inventive Example IE1).

**Table 1:** Preparation of a random propylene copolymer

| Parameter | unit | REF 1 | CE 1 | CE 2 | IE 1 |
|---|---|---|---|---|---|
| **Prepolymerisation** | | | | | |
| temperature | [°C] | 35 | 35 | 35 | 35 |

(continued)

| Parameter | unit | REF 1 | CE 1 | CE 2 | IE 1 |
|---|---|---|---|---|---|
| **Prepolymerisation** | | | | | |
| pressure | [kPa] | 4750 | 4760 | 4780 | 4750 |
| Al/donor ratio | [mol/mol] | 8 | 20 | 20 | 80 |
| Donor feed | [g/t PP] | 45 | 18 | 18 | 4.5 |
| Catalyst feed | [g/h] | 1.2 | 1.3 | 1.4 | 1.3 |
| residence time | [h] | 0.39 | 0.37 | 0.35 | 0.36 |
| **Loop** | | | | | |
| temperature | [°C] | 70 | 70 | 70 | 70 |
| pressure | [kPa] | 4920 | 4930 | 4950 | 4900 |
| residence time | [h] | 0.33 | 0.33 | 0.32 | 0.39 |
| ethylene feed | [kg/h] | 1.0 | 1.27 | 1.25 | 1.15 |
| $C_2/C_3$ ratio | [mol/kmol] | 4.8 | 5.9 | 5.7 | 5.4 |
| $H_2/C_3$ ratio | [mol/kmol] | 1.12 | 1.08 | 1.06 | 1.06 |
| Al/donor ratio | [mol/mol] | 0 | 13 | 13 | 8 |
| Donor feed | [g/t PP] | 0 | 27 | 27 | 41 |
| Donor Split Prepol/loop | [wt%:wt%] | 100:0 | 40:60 | 40:60 | 10:90 |
| $MFR_2$ | [g/10 min] | 1.6 | 1.4 | 1.1 | 1.2 |
| XCS | [wt%] | 3.1 | 5.2 | 4.9 | 5.3 |
| $C_2$-content | [wt%] | 2.0 | 2.5 | 2.24 | 2.3 |
| Productivity | [kg PP/g cat] | 20.45 | 21.43 | 20.51 | 20.15 |
| **GPR 1** | | | | | |
| temperature | [°C] | 80 | 80 | 80 | 80 |
| pressure | [kPa] | 2050 | 2050 | 2050 | 2050 |
| residence time | [h] | 1.1 | 1.1 | 1.1 | 1.1 |
| ethylene feed | [kg/h] | 3.0 | 3.5 | 3.3 | 3.3 |
| $H_2/C_3$ ratio | [mol/kmol] | 2.1 | 2.0 | 2.1 | 2.0 |
| $C_2/C_3$ ratio | [mol/kmol] | 29.5 | 32.2 | 31.1 | 32.7 |
| Split loop:GPR1 | [wt%:wt%] | 40:60 | 47:53 | 44:56 | 41:59 |
| XCS | [wt%] | 5.3 | 5.8 | 6.4 | 5.2 |
| $C_2$-content | [wt%] | 2.7 | 3.1 | 3.3 | 3.0 |
| $MFR_2$ | [g/10 min] | 0.5 | 0.5 | 0.5 | 0.7 |
| Total Productivity | [kg PP/g cat] | 50.9 | 45.7 | 47.0 | 78.1 |

The productivity in GPR1 with high donor split (IE1) is clearly higher (78 kg/g vs 51 kg/g in REF 1) while the Loop productivities are the same. XS after loop was 3 wt% in REF 1 and around 5 wt% in all the donor split lots (CE 1, CE 2 and IE 1), but the final XS measured from mixer was the same in all the lots (around 6 wt%, see table 2). All lots in this target were run with same $H_2/C_3$ ratio (1.1 mol/kmol) and $MFR_2$ in REF 1 was 1.6 g/10min and in IE 1 1.2 g/10min. Ethylene contents after Loop and after GPR were similar in REF 1 and CE 1, CE 2 and IE 1 lots (around 2 wt% after loop and around 3 wt% after GPR1).

The products from the gas phase reactor were mixed with a conventional additive package comprising 0.2 wt/%

Irganox B225 (antioxidant masterbatch supplied by Ciba Specialty Chemicals, Switzerland) and 0.05 wt% Ca-Stearate (CAS-No. 1592-23-0). The compositions were homogenized and pelletized in a co-rotating a twin screw extruder (PRISM TSE24 L/D ratio 40) with different mixing segments at temperatures between 190 and 240°C at a throughput of 10 kg/h and a screw speed of 50 rpm. The material was extruded to two circular dies of 3 mm diameter into a water bath for strand solidification and then pelletized and dried.

**Table 2:** Properties of the final product

| Parameter | unit | REF 1 | CE 1 | CE 2 | IE 1 |
|---|---|---|---|---|---|
| PP Mixer $MFR_2$ | [g/10min] | 0.4 | 0.5 | 0.4 | 0.5 |
| PP Mixer XCS | [wt%] | 6.0 | 6.1 | 5.6 | 6.0 |
| PP Mixer C2 total | [wt%] | 2.8 | 3.2 | 3.4 | 3.4 |
| PP Pellet $MFR_2$ | [g/10min] | 0.6 | 0.6 | 0.5 | 0.6 |
| PP Pellet Tm | [°C] | 152.8 | 152.2 | 150.3 | 150.4 |
| PP Pellet Tc | [°C] | 119.2 | 117.8 | 116.9 | 117.4 |
| PP Pellet Randomness | [%] | 76.4 | 74.0 | 73.1 | 74.6 |

**EXAMPLE 2:**

The polymerisations were conducted in a Borstar pilot plant polymerisation process starting in a prepolymerisation reactor, followed by polymerisation in a bulk-phase loop reactor, again followed by polymerisation in three subsequent gas phase reactors, varying the molecular weight and ethylene content by appropriate hydrogen and comonomer feeds. The catalyst used in the polymerisation process was a catalyst 1.9 wt% Ti-Ziegler-Natta-catalyst prepared according to WO 92/19653 with DOP as dialkylphthalat of the formula (IV) and ethanol as alcohol with triethyl-aluminium (TEA) as co-catalyst and diethylaminotriethoxysilane as donor in the ratios indicated in table 3.

Before the polymerisation, the catalyst was prepolymerised with vinylcyclohexane in an amount to achieve a concentration of 200 ppm poly(vinylcyclohexane) (PVCH) in the final polymer. The respective process is described in EP 1 028 984 and EP 1 183 307.

Two Comparative Examples CE 3 and CE 4 and 6 Inventive Examples (IE 2 to IE 7) have been performed.

**Table 3:** Preparation of heterophasic propylene copolymers

| Parameter | unit | CE 3 | CE 4 | IE 2 | IE 3 | IE 4 | IE 5 | IE 6 | IE 7 |
|---|---|---|---|---|---|---|---|---|---|
| **Prepolymerisation** | | | | | | | | | |
| temperature | [°C] | 30 | 29 | 29 | 29 | 30 | 29 | 30 | 30 |
| pressure | [kPa] | 5270 | 5250 | 5260 | 5300 | 5220 | 5280 | 5170 | 5170 |
| Al/donor ratio | [mol/mol] | 10 | 10 | 50 | 50 | 50 | 50 | 50 | 50 |
| Donor feed | [g/t PP] | 40 | 40 | 8 | 8 | 8 | 8 | 8 | 8 |
| Catalyst feed | [g/h] | 3.5 | 3.5 | 3.5 | 3.5 | 3.5 | 3.5 | 3.5 | 3.5 |
| residence time | [h] | 0.3 | 0.3 | 0.3 | 0.3 | 0.3 | 0.3 | 0.3 | 0.3 |
| **Loop** | | | | | | | | | |
| temperature | [°C] | 72 | 72 | 72 | 72 | 72 | 72 | 72 | 72 |
| pressure | [kPa] | 5470 | 5430 | 5420 | 5420 | 5430 | 5400 | 5410 | 5420 |
| residence time | [h] | 0.4 | 0.4 | 0.4 | 0.4 | 0.4 | 0.4 | 0.4 | 0.4 |
| ethylene feed | [kg/h] | 0 | 0 | 0 | 0 | 0 | 0 | 0 | 0 |
| $H_2/C_3$ ratio | [mol/kmol] | 25.1 | 24.5 | 21.7 | 21.5 | 20.8 | 22.6 | 21.2 | 21.1 |
| Al/donor ratio | [mol/mol] | 0 | 0 | 10 | 10 | 10 | 10 | 10 | 10 |
| Donor feed | [g/t PP] | 0 | 0 | 32 | 32 | 32 | 32 | 32 | 32 |

(continued)

| | | | | | | | | | |
|---|---|---|---|---|---|---|---|---|---|
| **Loop** | | | | | | | | | |
| Donor Split Prepol/loop | [wt%:wt%] | 100:0 | 100:0 | 20:80 | 20:80 | 20:80 | 20:80 | 20:80 | 20:80 |
| $MFR_2$ | [g/10 min] | 280 | 320 | 347 | 424 | 311 | 371 | 357 | 331 |
| XCS | [wt%] | 2.3 | 2.4 | 2.5 | 2.2 | 2.5 | 2.2 | 2.0 | 2.0 |
| Productivity | [kg PP/g cat] | 8.9 | 8.9 | 8.1 | 8.6 | 9.1 | 8.4 | 8.6 | 9.1 |
| **GPR 1** | | | | | | | | | |
| temperature | [°C] | 85 | 85 | 85 | 85 | 85 | 85 | 85 | 85 |
| pressure | [kPa] | 1600 | 1600 | 1600 | 1600 | 1600 | 1600 | 1600 | 1600 |
| residence time | [h] | 1.7 | 1.7 | 1.9 | 1.8 | 1.7 | 1.8 | 1.8 | 1.7 |
| ethylene feed | [kg/h] | 0 | 0 | 0 | 0 | 0 | 0 | 0 | 0 |
| $H_2/C_3$ ratio | [mol/kmol] | 165 | 167 | 161 | 137 | 139 | 140 | 134 | 135 |
| Productionsplit loop:GPR1 | [wt%:wt%] | 59:41 | 59:41 | 61:39 | 60:40 | 61:39 | 60:40 | 60:40 | 61:39 |
| $MFR_2$ | [g/10 min] | 249 | 245 | 274 | 274 | 242 | 263 | 246 | 236 |
| XCS | [wt%] | 2.3 | 2.4 | 2.4 | 2.3 | 2.3 | 2.3 | 2.3 | 2.3 |
| Productivity (loop + GPR1) | [kgPP/gcat] | 15.0 | 15.0 | 13.5 | 14.2 | 14.9 | 14.2 | 14.3 | 14.9 |
| **GPR 2** | | | | | | | | | |
| temperature | [°C] | 75 | 75 | 75 | 75 | 75 | 75 | 75 | 75 |
| pressure | [kPa] | 2200 | 2200 | 2200 | 2200 | 2200 | 2200 | 2170 | 2170 |
| residence time | [h] | 1.4 | 1.3 | 1.5 | 1.9 | 1.6 | 1.8 | 1.8 | 1.9 |
| ethylene feed | [kg/h] | 49.3 | 51.7 | 50.7 | 55.3 | 50.1 | 54.7 | 51.8 | 51.0 |
| $C_2/C_3$ ratio | [mol/kmol] | 1039 | 1009 | 1000 | 1065 | 967 | 1046 | 1617 | 1748 |
| $H_2/C_2$ ratio | [mol/kmol] | 140 | 138 | 144 | 319 | 162 | 164 | 274 | 313 |
| Productionsplit GPR2 | [wt%] | 27.1 | 28.3 | 29.6 | 27.6 | 30.0 | 30.1 | 25.5 | 24.6 |
| $MFR_2$ | [g/10 min] | 83 | 88 | 95 | 115 | 110 | 75 | 80 | 107 |
| XCS | [wt%] | 19.6 | 19.2 | 17.9 | 18.3 | 20.8 | 22.2 | 23.9 | 23.4 |
| AM | [wt%] | 17.6 | 17.3 | 16.1 | 16.5 | 18.6 | 20.3 | 21.6 | 21.1 |
| $C_2$ of AM | [wt%] | 46.1 | 47.9 | 49.9 | 48.0 | 50.8 | 49.8 | 51.4 | 51.8 |
| iV of AM | [dl/g] | 1.9 | 1.7 | 1.7 | 1.4 | 1.7 | 2.0 | 2.0 | 2.0 |
| $C_2$-content | [wt%] | 12.5 | 12.7 | 12.9 | 13.6 | 15.1 | 14.9 | 16.1 | 13.7 |
| Productivity (loop+GPR1+GRP2) | [kgPP/gcat] | 17.6 | 17.5 | 15.5 | 16.5 | 17.6 | 17.0 | 17.3 | 18.1 |
| **GPR 3** | | | | | | | | | |
| temperature | [°C] | 80 | 80 | 80 | 80 | 83 | 85 | 85 | 85 |
| pressure | [kPa] | 2100 | 2100 | 2100 | 2100 | 2370 | 2400 | 2400 | 2400 |
| residence time | [h] | 1.3 | 1.2 | 1.2 | 1.0 | 0.9 | 0.9 | 1.0 | 1.0 |
| ethylene feed | [kg/h] | 20 | 20 | 20 | 20 | 20 | 20 | 20 | 20 |
| $C_2/C_3$ ratio | [mol/kmol] | 355 | 348 | 353 | 353 | 219 | 348 | 365 | 365 |
| $H_2/C_2$ ratio | [mol/kmol] | 10 | 11 | 11 | 11 | 12 | 8 | 22 | 23 |
| Productionsplit GPR3 | [wt%] | 9.3 | 9.1 | 12.7 | 8.3 | 9.5 | 10.0 | 7.2 | 7.5 |

(continued)

| GPR 3 | | | | | | | | | |
|---|---|---|---|---|---|---|---|---|---|
| $MFR_2$ | [g/10 min] | 38 | 43 | 39 | 47 | 35 | 34 | 38 | 42 |
| XCS | [wt%] | 26.6 | 25.9 | 28.2 | 24.3 | 28.0 | 29.9 | 28.8 | 28.6 |
| AM | [wt%] | 25.0 | 24.6 | 26.7 | 22.5 | 26.3 | 28.4 | 26.7 | 26.5 |
| $C_2$ of AM | [wt%] | 42.0 | 43.2 | 44.8 | 43.6 | 45.6 | 45.3 | 47.2 | 47.3 |
| iV of AM | [dl/g] | 2.6 | 2.4 | 2.5 | 2.5 | 2.8 | 3.0 | 3.0 | 3.0 |
| $C_2$-content | [wt%] | 15.4 | 15.4 | 17.2 | 17.0 | 16.8 | 17.4 | 19.6 | 18.2 |
| Total Productivity | [kgPP/gcat] | 19.2 | 19.1 | 17.5 | 17.8 | 19.3 | 18.7 | 18.6 | 19.4 |

A remarkable effect was seen in hydrogen response. In Figure 1 it can be clearly seen that the hydrogen response in the loop reactor with the inventive method, i.e. donor split 20/80 is much better compared to the method without donor split, i.e. 100% of donor into prepolymerisation.

## Claims

1. Process for producing polypropylene, which process comprises the steps of (a) prepolymerisation, (b) slurry phase polymerisation (c) gas phase polymerisation and optionally (d) one or two further gas phase polymerisation(s), whereby the process is performed in the presence of a catalyst system comprising

   (x) a Ziegler-Natta procatalyst and
   (y) an organometallic cocatalyst and
   (z) an external donor represented by formula (I) and/or (II)

   $$Si(OCH_2CH_3)_3(NR^1R^2) \text{ (I) or } R^3nR^4mSi(OR^5)z \qquad \text{(II)}$$

   wherein $R^1$ and $R^2$ can be the same or different and represent a hydrocarbon group having 1 to 12 carbon atoms and $R^3$ and $R^4$ can be the same or different and represent a hydrocarbon group having 1 to 12 carbon atoms, $R^5$ is methyl or ethyl, z is 2 or 3, preferably 2, m is 0 or 1, n is 0 or 1, with the proviso that n + m +z = 4, the external donor being added in an amount of 3 to 30 wt%, based on the total amount of external donor added, to the prepolymerisation step and in an amount of 70 to 97 wt%, based on the total amount of external donor added, to the slurry polymerisation step.

2. Process according to claim1, wherein the polypropylene produced can be a propylene homopolymer, a propylene random copolymer or a heterophasic propylene polymer.

3. Process according to claim 1 or 2, wherein comonomers selected from ethylene and/or a $C_4$ to $C_{10}$ alpha olefin are used for preparing propylene random copolymers or heterophasic propylene polymers.

4. Process according to anyone of the preceding claims 1 to 3, wherein the procatalyst (x) is a Ziegler-Natta procatalyst, which contains a trans-esterification product of a lower alcohol and a phthalic ester as internal donor and which is optionally modified with a vinyl compound of formula (III) $CH_2$=CH-CH$R^6R^7$ wherein $R^6$ and $R^7$ together form a 5- or 6-membered saturated, unsaturated or aromatic ring or independently represent an alkyl group comprising 1 to 4 carbon atoms.

5. Process according to claim 4, wherein the vinyl compound of formula (III) suitable for modifying the procatalyst is selected from vinyl cyclohexene, vinyl cyclopentane, vinyl-2-methyl cyclohexene and vinyl norbornane, 3-methyl-1-butene, styrene, p-methyl-styrene, 3-ethyl-1-hexene or mixtures thereof.

6. Process according to claim 4, wherein the Ziegler-Natta procatalyst used has been prepared by

   a) reacting a spray crystallized or emulsion solidified adduct of $MgCl_2$ and a $C_1$-$C_4$-alcohol with $TiCl_4$

b) reacting the product of stage a) with a dialkylphthalate of formula (IV)

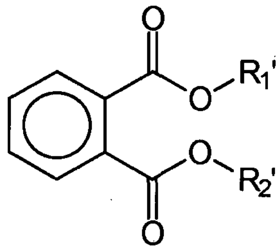

(IV)

wherein $R_1$' and $R_2$' are independently at least a $C_5$-alkyl
under conditions where a transesterification between said $C_1$-$C_4$-alcohol and said dialkylphthalate of formula (IV) takes place to form the internal donor
c) washing the product of stage b) and
d) optionally reacting the product of step c) with $TiCl_4$.

**7.** Process according to claim 6, **characterized in that** the dialkylphthalate of formula (IV) is di(ethylhexyl)phthalate and that the $C_1$-$C_4$-alcohol is ethanol.

**8.** Process according to anyone of the preceding claims 1 to 7, wherein the Ziegler-Natta procatalyst (x) is used in the presence of an organometallic cocatalyst (y) select from the group consisting of trialkylaluminium, dialkyl aluminium chloride and alkyl aluminium sesquichloride.

**9.** Process according to claim 8, **characterized in that** the cocatalyst is triethylaluminium or diethylaluminium chloride.

**10.** Process according to anyone of the preceding claims 1 to 9, wherein the Ziegler-Natta procatalyst is used in the presence of diethylaminotriethoxysilane or dicyclopentyldimethoxysilane as external donor.

**11.** Process according to anyone of the preceding claims 1 to 9, wherein said process is a process for producing propylene homopolymers or propylene random copolymers, said process comprises the steps of (a) prepolymerisation, (b) slurry phase polymerisation and (c) gas phase polymerisation, whereby the process is performed in the presence of a catalyst system comprising

(x) a Ziegler-Natta procatalyst,
(y) an organometallic cocatalyst and
(z) an external donor represented by formula (II)

$$R^3nR^4mSi(OR^5)z \qquad (II)$$

wherein $R^3$ and $R^4$ can be the same or different and represent a hydrocarbon group having 1 to 12 carbon atoms, $R^5$ is methyl or ethyl, z is 2 or 3, preferably 2, m is 0 or 1, n is 0 or 1, with the proviso that n + m +z = 4, the external donor being added in an amount of 5 to 25 wt%, preferably 8 to 18 wt%, based on the total amount of external donor added, to the prepolymerisation step and in an amount of 75 to 95 wt%, preferably 82 to 92 wt%, based on the total amount of external donor added, to the slurry polymerisation step.

**12.** Process according to claim 11, wherein the Ziegler-Natta procatalyst (x) used is a Ziegler-Natta procatalyst, which contains a trans-esterification product of a $C_1$-$C_4$-alcohol and a phthalic ester of formula (IV) as internal donor.

**13.** Process according to claim 11 and 12, wherein the catalyst system used comprises

(x) a Ziegler-Natta procatalyst, which contains a trans-esterification product of ethanol and di(ethylhexyl)phthalate as internal donor
(y) triethylaluminium as cocatalyst and
(z) dicyclopentyldimethoxysilane as external donor.

**14.** Process according to anyone of the preceding claims 1 to 10, wherein said process is a process for producing

heterophasic propylene polymers, said process comprises the steps of (a) prepolymerisation, (b) slurry phase polymerisation (c) gas phase polymerisation and (d) one or two further gas phase polymerisation(s), whereby the process is performed in the presence of a catalyst system comprising

(x) a Ziegler-Natta procatalyst and
(y) an organometallic cocatalyst and
(z) an external donor represented by formula (I)

$$Si(OCH_2CH_3)_3(NR^1R^2) \quad (I)$$

wherein $R^1$ and $R^2$ can be the same or different and represent a hydrocarbon group having 1 to 12 carbon atoms, the external donor being added in an amount of 5 to 30 wt%, preferably 8 to 25 wt%, based on the total amount of external donor added, to the prepolymerisation step and in an amount of 70 to 95 wt%, preferably 75 to 92 wt%, based on the total amount of external donor added, to the slurry polymerisation step.

**15.** Process according to claim 14, wherein the Ziegler-Natta procatalyst (x) used is a Ziegler-Natta procatalyst, which contains a trans-esterification product of a $C_1$-$C_4$-alcohol and a phthalic ester of formula (IV) as internal donor and which is modified with a vinyl compound of formula (III) $CH_2=CH-CHR^6R^7$, wherein $R^6$ and $R^7$ together form a 5- or 6-membered saturated, unsaturated or aromatic ring or independently represent an alkyl group comprising 1 to 4 carbon atoms.

**16.** Process according to claim 14 and 15, wherein the catalyst system used comprises

(x) a Ziegler-Natta procatalyst which contains a trans-esterification product of ethanol and di(ethylhexyl)phthalate as internal donor and which is modified by polymerizing it with vinyl cyclohexene
(y) triethylaluminium as cocatalyst and
(z) diethylaminotriethoxysilane as external donor.

## Patentansprüche

**1.** Verfahren zur Herstellung von Polypropylen, welches Verfahren die Schritte (a) Vorpolymerisation, (b) Slurry-Phasen-Polymerisation, (c) Gasphasen-Polymerisation und gegebenenfalls (d) eine oder zwei weitere Gasphasen-Polymerisation(en) umfasst, wobei das Verfahren in der Gegenwart eines Katalysatorsystems ausgeführt wird, umfassend:

(x) einen Ziegler-Natta-Prokatalysator und
(y) einen organometallischen Cokatalysator und
(z) einen externen Donor, der durch Formel (I) und/oder (II) dargestellt wird,

$$Si(OCH_2CH_3)_3(NR^1R^2) \text{ (I) oder } R^3nR^4mSi(OR^5)z \quad (II)$$

wobei $R^1$ und $R^2$ gleich oder unterschiedlich sein können und eine Kohlenwasserstoffgruppe mit 1 bis 12 Kohlenstoffatomen darstellen und $R^3$ und $R^4$ gleich oder unterschiedlich sein können und eine Kohlenwasserstoffgruppe mit 1 bis 12 Kohlenstoffatomen darstellen, $R^5$ Methyl oder Ethyl ist, z 2 oder 3 ist, vorzugsweise 2, m 0 oder 1 ist, n 0 oder 1 ist, mit der Maßgabe, dass $n + m + z = 4$,
wobei der externe Donor in einer Menge von 3 bis 30 Gewichtsprozent, basierend auf der Gesamtmenge des zugegebenen externen Donors, dem Vorpolymerisationsschritt zugegeben wird und in einer Menge von 70 bis 97 Gewichtsprozent, basierend auf der Gesamtmenge des zugegebenen externen Donors, dem Slurry-Polymerisationsschritt zugegeben wird.

**2.** Verfahren nach Anspruch 1, bei dem das hergestellte Polypropylen ein Propylen-Homopolymer, ein Propylen-Random-Copolymer oder ein heterophasisches Propylen-Polymer.

**3.** Verfahren nach Anspruch 1 oder 2, bei dem zur Herstellung von Propylen-Random-Copolymeren oder heterophasischen Propylen-Polymeren Comonomere verwendet werden, die aus Ethylen und/oder $C_4$-$C_{10}$-Alpha-Olefin ausgewählt sind.

**4.** Verfahren nach einem der vorherigen Ansprüche 1 bis 3, bei dem der Prokatalysator (x) ein Ziegler-Natta-Prokatalysator ist, der ein Umesterungs-Produkt eines niederen Alkohols und eines Phthalsäureesters als internen Donor enthält und der gegebenenfalls mit einer Vinylverbindung der Formel (III) $CH_2=CH-CHR^6R^7$ modifiziert ist, wobei $R^6$ und $R^7$ zusammen einen 5- oder 6-gliedrigen gesättigten, ungesättigten oder aromatischen Ring bilden oder unabhängig eine Alkylgruppe darstellen, die 1 bis 4 Kohlenstoffatome umfasst.

**5.** Verfahren nach Anspruch 4, bei dem die zum Modifizieren des Prokatalysators geeignete Vinylverbindung der Formel (III) aus Vinylcyclohexen, Vinylcyclopentan, Vinyl-2-methylcyclohexen und Vinylnorbornan, 3-Methyl-1-buten, Styrol, p-Methylstyrol, 3-Ethyl-1-hexen oder Mischungen daraus ausgewählt ist.

**6.** Verfahren nach Anspruch 4, bei dem der verwendete Ziegler-Natta-Prokatalysator hergestellt wurde durch:

(a) Reagieren eines spraykristallisierten oder emulsionsverfestigten Addukts von $MgCl_2$ und einem $C_1$-$C_4$-Alkohol mit $TiCl_4$,
(b) Reagieren des Produkts aus Schritt a) mit einem Dialkylphthalat der Formel (IV),

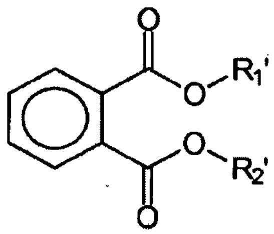

(IV)

wobei $R_1$' und $R_2$' unabhängig wenigstens ein $C_5$-Alkyl sind, unter Bedingungen, bei denen eine Umesterung zwischen dem $C_1$-$C_4$-Alkohol und dem Dialkylphthalat der Formel (IV) stattfindet, um den internen Donor zu bilden,
(c) Waschen des Produkts aus Stufe b) und
(d) gegebenenfalls Reagieren des Produkts aus Schritt c) mit $TiCl_4$.

**7.** Verfahren nach Anspruch 6, **dadurch gekennzeichnet, dass** das Dialkylphthalat der Formel (IV) Di(ethylhexyl)phthalat ist und der $C_1$-$C_4$-Alkohol Ethanol ist.

**8.** Verfahren nach einem der vorherigen Ansprüche 1 bis 7, bei dem der Ziegler-Natta-Prokatalysator (x) in der Gegenwart eines organometallischen Cokatalysators (y) verwendet wird, der aus der Gruppe ausgewählt ist, die aus Trialkylaluminium, Dialkylaluminiumchlorid und Alkylaluminiumsesquichlorid besteht.

**9.** Verfahren nach Anspruch 8, **dadurch gekennzeichnet, dass** der Cokatalysator Triethylaluminium oder Diethylaluminiumchlorid ist.

**10.** Verfahren nach einem der vorherigen Ansprüche 1 bis 9, bei dem der Ziegler-Natta-Prokatalysator in der Gegenwart von Diethylaminotriethoxysilan oder Dicyclopentyldimethoxysilan als externem Donor verwendet wird.

**11.** Verfahren nach einem der vorherigen Ansprüche 1 bis 9, bei dem das Verfahren ein Verfahren zur Herstellung von Propylen-Homopolymeren oder Propylen-Random-Copolymeren ist, wobei das Verfahren die Schritte (a) Vorpolymerisation, (b) Slurry-Phasen-Polymerisation und (c) Gasphasen-Polymerisation umfasst, wobei das Verfahren in der Gegenwart eines Katalysatorsystems ausgeführt wird, umfassend:

(x) einen Ziegler-Natta-Prokatalysator,
(y) einen organometallischen Cokatalysator und
(z) einen externen Donor, der durch Formel (II) dargestellt wird,

$$R^3nR^4mSi(OR^5)z \qquad (II)$$

wobei $R^3$ und $R^4$ gleich oder unterschiedlich sein können und eine Kohlenwasserstoffgruppe mit 1 bis 12 Kohlenstoffatomen darstellen, $R^5$ Methyl oder Ethyl ist, z 2 oder 3 ist, vorzugsweise 2, m 0 oder 1 ist, n 0 oder

1 ist, mit der Maßgabe, dass n + m + z = 4, wobei der externe Donor in einer Menge von 5 bis 25 Gewichtsprozent, vorzugsweise 8 bis 18 Gewichtsprozent, basierend auf der Gesamtmenge des zugegebenen externen Donors, dem Vorpolymerisationsschritt zugegeben wird und in einer Menge von 75 bis 95 Gewichtsprozent, vorzugsweise 82 bis 92 Gewichtsprozent, basierend auf der Gesamtmenge des zugegebenen externen Donors, dem Slurry-Polymerisationsschritt zugegeben wird.

**12.** Verfahren nach Anspruch 11, bei dem der verwendete Ziegler-Natta-Prokatalysator (x) ein Ziegler-Natta-Prokatalysator ist, der ein Umesterungs-Produkt von Ethanol und Di(ethylhexyl)phthalat als internen Donor enthält.

**13.** Verfahren nach Anspruch 11 und 12, bei dem das verwendete Katalysatorsystem umfasst:

(x) einen Ziegler-Natta-Prokatalysator, der ein Umesterungs-Produkt von Ethanol und Di(ethylhexyl)phthalat als internen Donor enthält,
(y) Triethylaluminium als Cokatalysator und
(z) Dicyclopentyldimethoxysilan als externen Donor.

**14.** Verfahren nach einem der vorherigen Ansprüche 1 bis 10, bei dem das Verfahren ein Verfahren zur Herstellung von heterophasischen Propylen-Polymeren ist, wobei das Verfahren die Schritte (a) Vorpolymerisation, (b) Slurry-Phasen-Polymerisation, (c) Gasphasen-Polymerisation und wahlweise eine oder zwei weitere Gasphasen-Polymerisation(en) umfasst, wobei das Verfahren in der Gegenwart eines Katalysatorsystems ausgeführt wird, umfassend:

(x) einen Ziegler-Natta-Prokatalysator und
(y) einen organometallischen Cokatalysator und
(z) einen externen Donor, der durch Formel (I) dargestellt wird,

$$Si(OCH_2CH_3)_3(NR^1R^2) \qquad (I)$$

wobei $R^1$ und $R^2$ gleich oder unterschiedlich sein können und eine Kohlenwasserstoffgruppe mit 1 bis 12 Kohlenstoffatomen darstellen,
wobei der externe Donor in einer Menge von 5 bis 30 Gewichtsprozent, vorzugsweise 8 bis 25 Gewichtsprozent, basierend auf der Gesamtmenge des zugegebenen externen Donors, dem Vorpolymerisationsschritt zugegeben wird und in einer Menge von 70 bis 95 Gewichtsprozent, vorzugsweise 75 bis 92 Gewichtsprozent, basierend auf der Gesamtmenge des zugegebenen externen Donors, dem Slurry-Polymerisationsschritt zugegeben wird.

**15.** Verfahren nach Anspruch 14, bei dem der Ziegler-Natta-Prokatalysator (x) ein Ziegler-Natta-Prokatalysator ist, der ein Umesterungs-Produkt eines $C_1$-$C_4$-Alkohols und eines Phthalsäureesters der Formel (IV) als internen Donor enthält und der mit einer Vinylverbindung der Formel (III) $CH_2$=CH-$CHR^6R^7$ modifiziert ist, wobei $R^6$ und $R^7$ zusammen einen 5- oder 6-gliedrigen gesättigten, ungesättigten oder aromatischen Ring bilden oder unabhängig eine Alkylgruppe darstellen, die 1 bis 4 Kohlenstoffatome umfasst.

**16.** Verfahren nach Anspruch 14 und 15, bei dem das verwendete Katalysatorsystem umfasst:

(x) einen Ziegler-Natta-Prokatalysator, der ein Umesterungs-Produkt von Ethanol und Di(ethylhexyl)phthalat als internen Donor enthält und der durch dessen Polymerisieren mit Vinylcyclohexen modifiziert ist,
(y) Triethylaluminium als Cokatalysator und
(z) Diethylaminotriethoxysilan als externen Donor.

## Revendications

**1.** Procédé pour produire du polypropylène, lequel procédé comprend les étapes de (a) prépolymérisation, (b) polymérisation en phase en suspension, (c) polymérisation en phase gazeuse et éventuellement (d) une ou deux autre(s) polymérisation(s) en phase gazeuse, lequel procédé est mis en oeuvre en présence d'un système catalyseur comprenant

(x) un procatalyseur de Ziegler-Natta et
(y) un cocatalyseur organométallique et

(z) un donneur externe représenté par l'une des formules (I) et/ou (II)

$$Si\ (OCH_2CH_3)_3(NR^1R^2)\ (I)\ ou\ R^3nR^4mSi(OR^5)z \qquad (II)$$

dans lesquelles $R^1$ et $R^2$ peuvent être identiques ou différents et représentent un groupe hydrocarboné possédant 1 à 12 atome (s) de carbone et $R^3$ et $R^4$ peuvent être identiques ou différents et représentent un groupe hydrocarboné possédant 1 à 12 atome (s) de carbone, $R^5$ est méthyle ou éthyle, z vaut 2 ou 3, de préférence 2, m vaut 0 ou 1, n vaut 0 ou 1, à la condition que n + m + z = 4, le donneur externe étant ajouté lors de l'étape de prépolymérisation en une quantité de 3 à 30 % en poids par rapport à la quantité totale du donneur externe ajouté, et lors de l'étape de polymérisation en suspension en une quantité de 70 à 97 % en poids par rapport à la quantité totale du donneur externe ajouté.

**2.** Procédé selon la revendication 1, dans lequel le polypropylène produit peut être un homopolymère de propylène, un copolymère statistique de propylène ou un polymère de propylène hétérophasique.

**3.** Procédé selon la revendication 1 ou 2, dans lequel des comonomères choisis parmi l'éthylène et/ou une α-oléfine en $C_4$ à $C_{10}$ sont utilisés pour la préparation de copolymères statistiques de propylène ou de polymères de propylène hétérophasiques.

**4.** Procédé selon l'une quelconque des revendications 1 à 3, dans lequel le procatalyseur (x) est un procatalyseur de Ziegler-Natta, qui contient un produit de trans-estérification d'un alcool inférieur et d'un ester phtalate en tant que donneur interne et qui est éventuellement modifié par un composé vinylique de formule (III) $CH_2=CH-CHR^6R^7$, dans laquelle $R^6$ et $R^7$ forment ensemble un cycle à 5 ou 6 chaînons saturé, insaturé ou aromatique, ou bien représentent indépendamment un groupe alkyle comprenant 1 à 4 atome(s) de carbone.

**5.** Procédé selon la revendication 4, dans lequel le composé vinylique de formule (III) convenant pour modifier le procatalyseur est choisi parmi le vinylcyclohexène, le vinylcyclopentane, le vinyl-2-méthylcyclohexène et le vinylnorbornane, le 3-méthyl-1-butène, le styrène, le p-méthylstyrène, le 3-éthyl-1-hexène, et leurs mélanges.

**6.** Procédé selon la revendication 4, dans lequel le procatalyseur de Ziegler-Natta utilisé a été préparé par

a) réaction d'un adduit solidifié en émulsion ou cristallisé par pulvérisation de $MgCl_2$ et d'un alcool en $C_1$ à $C_4$ avec du $TiCl_4$,
b) réaction du produit de l'étape a) avec un phtalate de dialkyle de formule (IV)

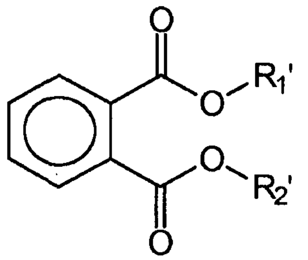

(IV)

dans laquelle $R_1$' et $R_2$' sont indépendamment au moins un alkyle en $C_5$,
dans des conditions où il se produit une trans-estérification entre ledit alcool en $C_1$ à $C_4$ et ledit phtalate de dialkyle de formule (IV) pour former le donneur interne,
c) lavage du produit de l'étape b) et
d) éventuellement réaction du produit de l'étape c) avec du $TiCl_4$.

**7.** Procédé selon la revendication 6, **caractérisé en ce que** le phtalate de dialkyle de formule (IV) est le phtalate de di (éthylhexyle) et **en ce que** l'alcool en $C_1$ à $C_4$ est l'éthanol.

**8.** Procédé selon l'une quelconque des revendications 1 à 7, dans lequel le procatalyseur de Ziegler-Natta (x) est utilisé en présence d'un cocatalyseur organométallique (y) choisi dans l'ensemble constitué par un trialkyl-aluminium, un chlorure de dialkyl-aluminium et un sesquichlorure d'alkyl-aluminium.

**9.** Procédé selon la revendication 8, **caractérisé en ce que** le cocatalyseur est le triéthyl-aluminium ou le chlorure de diéthyl-aluminium.

**10.** Procédé selon l'une quelconque des revendications 1 à 9, dans lequel le procatalyseur de Ziegler-Natta est utilisé en présence de diéthylaminotriéthoxysilane ou de dicyclopentyldiméthoxysilane en tant que donneur externe.

**11.** Procédé selon l'une quelconque des revendications 1 à 9, lequel procédé est un procédé pour produire des homopolymères de propylène ou des copolymères statistique de propylène, lequel procédé comprend les étapes de (a) prépolymérisation, (b) polymérisation en phase en suspension et (c) polymérisation en phase gazeuse, lequel procédé est mis en oeuvre en présence d'un système catalyseur comprenant

(x) un procatalyseur de Ziegler-Natta,
(y) un cocatalyseur organométallique et
(z) un donneur externe représenté par la formule (II)

$$R^3nR^4mSi(OR^5)z \qquad (II)$$

dans laquelle $R^3$ et $R^4$ peuvent être identiques ou différents et représentent un groupe hydrocarboné possédant 1 à 12 atome (s) de carbone, $R^5$ est méthyle ou éthyle, z vaut 2 ou 3, de préférence 2, m vaut 0 ou 1, n vaut 0 ou 1, à la condition que n + m + z = 4,
le donneur externe étant ajouté lors de l'étape de prépolymérisation en une quantité de 5 à 25 % en poids et de préférence de 8 à 18 % en poids par rapport à la quantité totale du donneur externe ajouté, et lors de l'étape de polymérisation en suspension en une quantité de 75 à 95 % en poids et de préférence de 82 à 92 % en poids par rapport à la quantité totale du donneur externe ajouté.

**12.** Procédé selon la revendication 11, dans lequel le procatalyseur de Ziegler-Natta (x) utilisé est un procatalyseur de Ziegler-Natta, qui contient un produit de trans-estérification d'un alcool en $C_1$ à $C_4$ et d'un ester phtalate de formule (IV) en tant que donneur interne.

**13.** Procédé selon les revendications 11 et 12, dans lequel le système catalyseur utilisé comprend

(x) un procatalyseur de Ziegler-Natta, qui contient un produit de trans-estérification d'éthanol et de phtalate de di(éthylhexyle) en tant que donneur interne,
(y) du triéthyl-aluminium en tant que cocatalyseur, et
(z) du dicyclopentyldiméthoxysilane en tant que donneur externe.

**14.** Procédé selon l'une quelconque des revendications 1 à 10, lequel procédé est un procédé pour produire des polymères de propylène hétérophasiques, lequel procédé comprend les étapes de (a) prépolymérisation, (b) polymérisation en phase en suspension, (c) polymérisation en phase gazeuse et (d) une ou deux autres polymérisation(s) en phase gazeuse, lequel procédé est mis en oeuvre en présence d'un système catalyseur comprenant

(x) un procatalyseur de Ziegler-Natta et
(y) un cocatalyseur organométallique et
(z) un donneur externe représenté par la formule (I) si $(OCH_2CH_3)_3(NR^1R^2)$ (I)
dans laquelle $R^1$ et $R^2$ peuvent être identiques ou différents et représentent un groupe hydrocarboné possédant 1 à 12 atome(s) de carbone,
le donneur externe étant ajouté lors de l'étape de prépolymérisation en une quantité de 5 à 30 % en poids et de préférence de 8 à 25 % en poids par rapport à la quantité totale du donneur externe ajouté, et lors de l'étape de polymérisation en suspension en une quantité de 70 à 95 % en poids et de préférence de 75 à 92 % en poids par rapport à la quantité totale du donneur externe ajouté.

**15.** Procédé selon la revendication 14, dans lequel le procatalyseur de Ziegler-Natta (x) utilisé est un procatalyseur de Ziegler-Natta, qui contient un produit de trans-estérification d'un alcool en $C_1$ à $C_4$ et d'un ester phtalate de formule (IV) en tant que donneur interne et qui est modifié par un composé vinylique de formule (III) $CH_2=CH-CHR^6R^7$, dans laquelle $R^6$ et $R^7$ forment ensemble un cycle à 5 ou 6 chaînons saturé, insaturé ou aromatique, ou bien représentent indépendamment un groupe alkyle comprenant 1 à 4 atome(s) de carbone.

**16.** Procédé selon les revendications 14 et 15, dans lequel le système catalyseur utilisé comprend

(x) un procatalyseur de Ziegler-Natta, qui contient un produit de trans-estérification d'éthanol et de phtalate de di (éthylhexyle) en tant que donneur interne et qui est modifié en étant polymérisé avec du vinylcyclohexène,
(y) du triéthyl-aluminium en tant que cocatalyseur, et
(z) du diéthylaminotriéthoxysilane en tant que donneur externe.

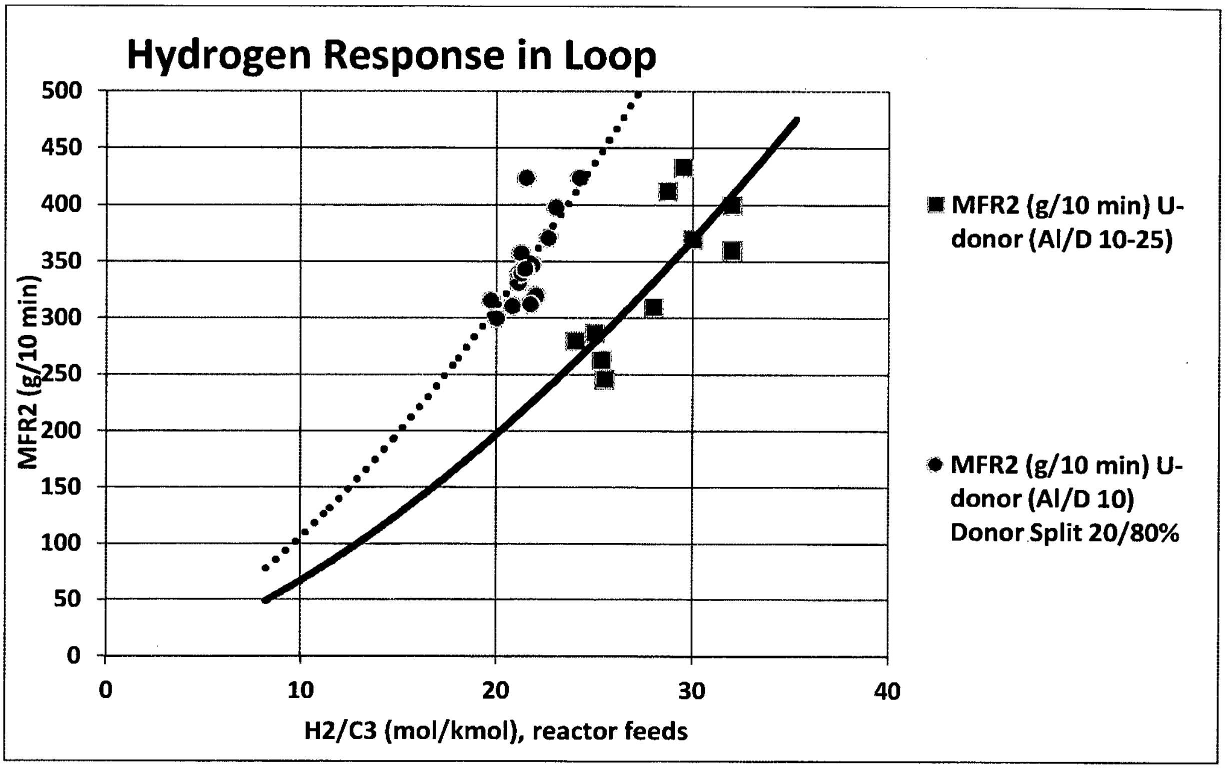


Figure 1: Hydrogen response in loop

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0887379 A
- EP 0887380 A
- EP 0887381 A
- EP 0991719 A
- EP 1028984 A
- EP 1598377 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 2004029112 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 0491566 A
- WO 9924478 A
- WO 9924479 A
- WO 0068315 A
- WO 9733920 A
- WO 0021656 A
- EP 0887379 A1
- WO 9212182 A
- WO 2004000899 A
- WO 2004111095 A
- EP 1183307 A


### Non-patent literature cited in the description


- *Thermochimica Acta,* 1990, vol. 66, 53-68